(19) **Europäisches Patentamt**

**European Patent Office**

**Office européen des brevets**

(11) **EP 1 291 707 A1**

(12) **DEMANDE DE BREVET EUROPEEN**

(43) Date de publication:
**12.03.2003 Bulletin 2003/11**

(51) Int Cl.⁷: **G02F 1/35**, G02B 6/12,
G02F 1/017

(21) Numéro de dépôt: **02291885.8**

(22) Date de dépôt: **25.07.2002**

(84) Etats contractants désignés:
**AT BE BG CH CY CZ DE DK EE ES FI FR GB GR
IE IT LI LU MC NL PT SE SK TR**
Etats d'extension désignés:
**AL LT LV MK RO SI**

(30) Priorité: **30.08.2001 FR 0111258**

(71) Demandeur: **ALCATEL
75008 Paris (FR)**

(72) Inventeurs:
• **Shen, Alexandre
75018 Paris (FR)**
• **Leclerc, Denis
91430 Igny (FR)**

(74) Mandataire: **Korakis-Ménager, Sophie et al
Compagnie Financière Alcatel
Département de Propriété Industrielle,
5, rue Noel Pons
92734 Nanterre Cedex (FR)**

(54) **Structure d'absorbant optique saturable et dispositif de regeneration d'un signal multiplexe en longueurs d'onde l'incorporant**

(57) L'invention concerne un absorbant optique saturable prévu pour recevoir différentes composantes spectrales focalisées, caractérisé en ce que la structure dudit absorbant optique saturable comprend des micro-cavités (10, 20, 30) intégrées sur un substrat (5), chacune associée respectivement à une desdites composantes spectrales, chaque micro-cavité (10, 20, 30) étant constituée d'une couche absorbante saturable (2) délimitée par un réflecteur inférieur (4) et un réflecteur supérieur (5) et étant disposée et dimensionnée de façon à recevoir exclusivement ladite composante spectrale focalisée qui lui est associée.

**Fig. 3**

EP 1 291 707 A1

**Description**

La présente invention concerne une structure particulière d'absorbant optique saturable et son application à la régénération d'un signal multiplexé en longueurs d'onde, encore noté «signal WDM», acronyme pour l'expression anglo-saxonne Wavelength Division Multiplex.

L'invention trouve une application particulièrement avantageuse dans les systèmes de transmissions de données binaires à haut débit par fibres optiques.

En effet, un signal optique qui se propage dans des fibres optiques, dans des noeuds de communication ou encore dans d'autres dispositifs optiques adaptés aux télécommunications où du bruit spontané est présent, subit inévitablement des pertes optiques et se modifie. Pour compenser le bruit parasite accumulé au cours de la propagation du signal, ainsi que la distorsion du signal et le décalage temporel, il est nécessaire de régénérer le signal.

Et plus particulièrement, l'invention se propose de mettre en oeuvre un régénérateur optique qui permet de réaliser une régénération d'un signal multiplexé, en parallèle sur tous les canaux WDM de multiplexage.

L'objectif que cherche alors à atteindre l'invention est de prévoir un dispositif de régénération qui ne comporte qu'une seule entrée optique ainsi qu'une seule sortie optique. Un signal multiplexé en longueurs d'onde, soit un signal WDM, est injecté sur l'unique entrée et on récupère l'ensemble des canaux WDM régénérés sur l'unique sortie. La régénération des canaux WDM implique le nettoyage du bruit qui est en fait assez lié à la propagation de la lumière sur de longues distances. Dans le cas de signaux optiques multiplexés en longueurs d'onde, le signal de chaque canal est modulé en puissance.

Le signal d'un canal d'une longueur d'onde donnée est donc un signal constitué d'impulsions temporelles représentant des niveaux logiques hauts «1» et bas «0».

Ainsi, une fois que le bruit au niveau des «0» ou le bruit entre les «1» a été supprimé, on peut espérer augmenter la distance de propagation car le bruit a été enlevé et dans ce cas, la remise en forme et la resynchronisation du signal se fait quasiment automatiquement.

Un tel dispositif de régénération comme évoqué ci-dessus a déjà été décrit dans la demande de brevet français n° 98 12430 déposé le 05 octobre 1998 et intitulé «Dispositif de régénération d'un signal multiplexé en longueurs d'onde comprenant un absorbant saturable», noté D1 par la suite.

Dans ce document de brevet, le signal optique multiplexé en longueurs d'onde à régénérer est issu d'une fibre optique et destiné à être réinjecté dans cette même fibre optique ou dans une autre. Le dispositif décrit comprend d'une part au moins un milieu dispersif pour recevoir le signal WDM et émettre une onde dispersée correspondante dans un espace libre, et d'autre part, un absorbant saturable disposé pour recevoir l'onde dispersée et transmettre une onde correspondante régénérée.

En effet, un absorbant optique saturable est un dispositif optique constitué notamment d'un matériau apte à absorber un signal optique de faible puissance, mais transparent aux signaux de puissance lumineuse élevée. Ainsi, le matériau d'un absorbant saturable est d'autant plus transparent pour un faisceau lumineux que la puissance de ce faisceau est élevée.

Or, on a déjà vu que dans le cas de signaux optiques multiplexés en longueurs d'onde, le signal de chaque canal est modulé en puissance. Lorsqu'une impulsion de puissance optique est reçue par un absorbant saturable, celui-ci devient transparent et laisse passer l'impulsion. En revanche, pour le bruit parasite de plus faible puissance présent entre les impulsions, l'absorbant saturable devient absorbant et atténue ce bruit.

Ainsi, selon le principe enseigné par l'art antérieur, l'onde issue d'une fibre optique est focalisée sur une barrette d'absorbant saturable en des points qui diffèrent selon les longueurs d'onde des canaux WDM, et ceci grâce au milieu dispersif du dispositif.

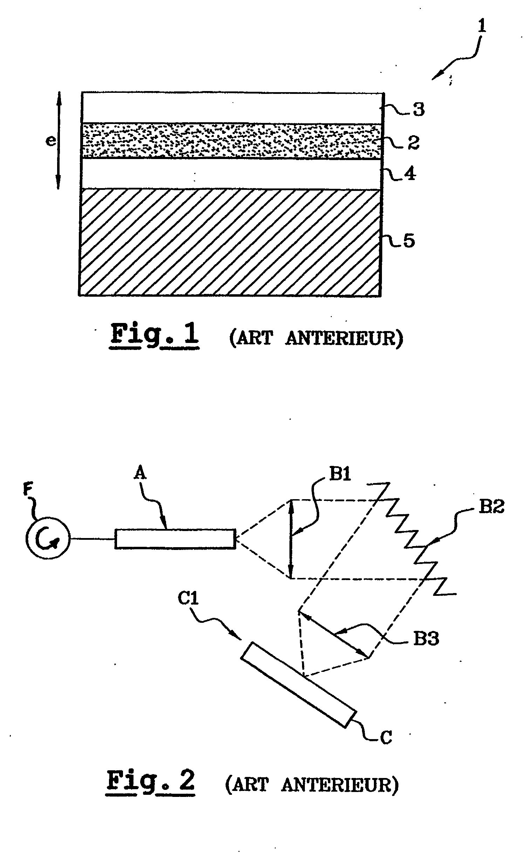

La barrette d'absorbant saturable de l'art antérieur qui est disposée pour recevoir l'onde dispersée et transmettre une onde correspondante régénérée est représentée en coupe à la figure 1. La couche active 2 de l'absorbant 1 est réalisée, de manière classique, au matériau ternaire, notamment en InGaAs ou en AlGaAs, et comporte des multi-puits quantiques. Elle peut aussi être réalisée en matériau quaternaire. Deux réflecteurs, respectivement 3 et 4, sont placés de part et d'autre de la couche active 2 et sont parallèles à celle-ci, de façon à générer des réflexions multiples de l'onde lumineuse traversant la couche active 2.

Grâce aux réflexions multiples, l'onde lumineuse traverse plusieurs fois la couche active 2 pour être absorbée, ce qui permet avantageusement de réduire l'épaisseur nécessaire de la couche active. Le réflecteur inférieur 4 est déposé sur une couche 5 formant le substrat, par exemple réalisée en InP.

L'ensemble formé pour la couche active 2 et les deux réflecteurs inférieur et supérieur, respectivement 4 et 3, présente une épaisseur e homogène sur toute la longueur de la barrette d'absorbant saturable 1.

Il est connu qu'une telle barrette d'absorbant saturable peut être utilisée pour régénérer un signal WDM. La figure 2 illustre un dispositif de régénération d'un signal WDM selon l'art antérieur présenté dans D1 qui met en oeuvre une telle barrette selon la figure 1.

Le signal optique issu de la fibre A est projeté par la lentille B1 sur le réseau B2.

Le réseau B2 permet d'une part, de séparer le signal optique en une pluralité de faisceaux lumineux ayant des longueurs d'onde différentes et, d'autre part, de dévier chacun de ces faisceaux lumineux selon un angle qui dépend du coefficient de dispersion du réseau et de la longueur d'onde dudit faisceau. La deuxième lentille B3, située en sortie du réseau B2, sert ensuite à focaliser chaque faisceau, dévié par le réseau, en un spot sur l'absorbant saturable C.

Le spot associé à chaque faisceau lumineux est en fait focalisé sur l'absorbant C à un endroit x qui dépend du coefficient de dispersion du réseau B2 et de la longueur d'onde du faisceau dévié.

Ainsi, à chaque longueur d'onde composant le signal optique WDM correspond un point de focalisation du spot sur l'absorbant saturable C.

Après régénération dans l'absorbant saturable, chacun des faisceaux doit revenir sur lui-même pour être envoyé de nouveau vers la fibre d'entrée A, après recombinaison par le réseau B2 de l'ensemble des faisceaux régénérés.

Pour pouvoir réfléchir le signal régénérée, la barrette d'absorbant saturable C comporte sur sa seconde face référencée C1, un revêtement réfléchissant ou un réflecteur de Bragg. D'une façon générale, cette seconde face est choisie perpendiculaire à la direction de propagation de l'onde qu'elle reçoit.

D'autre part, il est nécessaire de disposer d'un séparateur spatial, tel qu'un circulateur F par exemple, à l'autre extrémité de la fibre A. Le circulateur F permet en effet de séparer le signal optique destiné à être régénéré, qui circule dans un sens, de l'autre signal optique régénéré, qui circule dans le sens opposé.

Cependant, la structure de l'absorbant saturable de l'art antérieur utilisée dans le régénérateur optique de la figure 2 ne permet pas un traitement idéal du signal dans une configuration WDM en vue de sa régénération.

Ainsi, un certain nombre de problèmes, réhibitoires à une bonne régénération d'un signal WDM, apparaissent avec la structure d'absorbant saturable de l'art antérieur telle qu'elle a été présentée.

Notamment, un premier inconvénient qui apparaît dans le dispositif de régénération de l'art antérieur est la difficulté à récupérer le signal régénérée.

En effet, chacun des faisceaux correspondant à un canal de longueur d'onde particulier du signal WDM est focalisé sur l'absorbant saturable avec un angle d'incidence différent par rapport à l'axe optique de la lentille B3.

Or, le miroir avant de l'absorbant saturable est typiquement réglé de façon à réfléchir les faisceaux arrivant perpendiculairement sur sa surface. La réflexion sur le miroir avant de l'absorbant saturable pour chacun des faisceaux correspondant respectivement aux canaux de longueur d'onde du signal WDM ne peut donc être contrôlé avec précision du fait des angles d'incidence différents, ce qui entraîne l'impossibilité de récupérer le signal WDM régénérée complet dans la fibre A.

D'autre part, toutes les longueurs d'onde ne peuvent pas être en même temps résonantes. En effet, pour que l'onde associée à un faisceau lumineux incident sur la barrette d'absorbant saturable soit régénérée efficacement, le pic d'amplitude de l'onde, soit le ventre de l'onde, doit se situer au niveau de la couche active de l'absorbant saturable de façon à maximiser l'interaction entre l'onde et la couche active de l'absorbant.

Or, la condition de résonance est donnée par la relation suivante qui fournit une correspondance entre la longueur d'onde incidente et l'épaisseur de la cavité d'absorbant saturable.

$$\lambda = n_{eff}.e/K, \text{ où :}$$

$\lambda$ est la longueur d'onde de l'onde traversant la cavité d'absorbant saturable,
e est l'épaisseur de la cavité d'absorbant saturable,
$n_{eff}$ est l'indice effectif du milieu, et
k, un nombre entier, indique l'ordre de la résonance.

Comme la barrette de l'art antérieur a une épaisseur e constante sur toute sa longueur, le réglage correspondant à la vérification de la condition de résonance est obtenu pour une valeur de longueur d'onde bien particulière permettant de vérifier la condition ci-dessus. Or, dans le cas d'un signal WDM comprenant par exemple 25 longueurs d'onde différentes $\lambda 1$ à $\lambda 25$, la condition résonance ne peut pas être vérifiée pour toutes les longueurs d'onde. Ainsi, si la barrette d'absorbant saturable est réglée pour la valeur $\lambda 1$, lorsqu'on s'éloigne de cette position de réglage, l'épaisseur e de la barrette étant constante, la condition de résonance ne sera plus remplie pour $\lambda 25$. En d'autres termes, il n'est pas permis d'obtenir l'onde associée à la longueur d'onde $\lambda i$ résonante dans la couche active quel que soit i, avec i allant de 1 à 25 dans notre exemple. La régénération du signal WDM n'est donc pas optimale, du fait de la non vérification de la condition de résonance pour toutes les longueurs d'onde. Certains canaux sont en fait privilégiés par rapport à d'autres.

De plus, si on considère la position de référence correspondant à celle du faisceau lumineux qui arrive perpendiculairement sur la face avant de la barrette d'absorbant saturable, on a vu que plus on s'éloigne de cette position de référence, plus l'angle d'incidence de chaque faisceau lumineux associé à un canal WDM de longueur d'onde $\lambda i$ va être grand. Or, physiquement, la lentille B3 focalise chaque faisceau lumineux en en spot qui occupe donc une certaine aire sur l'absorbant saturable.

Après de multiples réflexions de l'onde au sein de la couche active de l'absorbant comme expliqué en référence à la figure 1, cette aire va se décaler pour les faisceaux dont l'angle d'incidence est grand.

Dans ce cas, la zone efficace qui correspond au recouvrement entre l'aire occupée par le spot avant la régénération au sein de la couche active et l'aire occupée par le spot après la régénération va donc être considérablement réduite. On a donc un problème de recouvrement de l'aire occupée par le spot lorsque l'angle d'incidence est élevé.

Enfin, un dernier problème de l'art antérieur concerne le phénomène de diaphonie. En effet, à chaque longueur d'onde composant le signal WDM correspond un point de focalisation du spot associé sur l'absorbant saturable et ces points de focalisation sont très proches spatialement. Le phénomène de diaphonie se traduit alors par la diffusion de porteurs de charge dans le matériau formant la couche active absorbante de la barrette lorsque celui-ci est éclairé au niveau d'un point de focalisation.

Si les points de focalisation sont trop proches les uns des autres, la diffusion de ces porteurs de charge au niveau d'un des points de focalisation va venir perturber la partie du matériau absorbant situé à côté et le traitement (absorption du bruit) du canal WDM correspondant sera donc défectueux.

Un but de la présente invention consiste à résoudre les inconvénients de l'art antérieur en proposant un absorbant optique saturable qui satisfasse les objectifs de régénération optimale d'un signal multiplexé en longueur d'onde comportant un nombre élevé de composantes spectrales, lorsqu'il est mis en oeuvre dans une telle application.

A cet effet, la barrette d'absorbant saturable est travaillée de façon à présenter une structure particulière qui comprend des micro-cavités intégrées. Chaque micro-cavité intégrée de l'absorbant optique saturable est avantageusement prévue pour être associée avec, et traiter exclusivement, l'une des composantes spectrales focalisées d'un signal optique multiplexé en longueur d'onde (signal WDM). De plus, l'épaisseur de chacune des micro-cavités est adaptée à la valeur de la longueur d'onde de la composante spectrale focalisée associée de façon à rendre celle-ci résonante au sein de la couche active absorbante de la micro-cavité.

La présente invention a donc plus particulièrement comme objet un absorbant optique saturable prévu pour recevoir différentes composantes spectrales focalisées, caractérisé en ce que la structure dudit absorbant optique comprend des micro-cavités intégrées, chacune associée respectivement à une desdites composantes spectrales, chaque micro-cavité étant constituée d'une couche absorbante saturable délimitée par un réflecteur inférieur et un réflecteur supérieur, et étant disposée et dimensionnée de façon à recevoir exclusivement ladite composante spectrale focalisée associée.

L'invention concerne également un régénérateur optique comprenant un démultiplexeur de longueurs d'onde pour recevoir un signal multiplexé en longueurs d'onde et pour focaliser les différentes composantes spectrales dudit signal multiplexé en longueurs d'onde respectivement en des points séparés spatialement, ledit régénérateur optique comprenant en plus une structure d'absorbant optique saturable prévue pour recevoir lesdites différentes composantes spectrales focalisées, caractérisé en ce que ladite structure d'absorbant optique saturable comprend des micro-cavités intégrées sur un substrat, chacune associée respectivement à une desdites composantes spectrales, chaque micro-cavité étant constituée d'une couche absorbante saturable délimitée par un réflecteur inférieur et un réflecteur supérieur et étant disposée et dimensionnée de façon à recevoir exclusivement ladite composante spectrale focalisée qui lui est associée.

D'autres particularités et avantages de la présente invention apparaîtront plus clairement à la lecture de la description donnée à titre d'exemple illustratif et non limitatif et faite en référence aux figures annexées dans lesquelles :

- la figure 1, déjà décrite, montre une vue en coupe d'une barrette d'absorbant optique saturable selon l'art antérieur ;
- la figure 2, déjà décrite, montre un régénérateur optique dans lequel est mis en oeuvre la barrette d'absorbant optique saturable selon l'art antérieur ;
- la figure 3 montre un schéma d'un premier mode de réalisation d'un absorbant optique saturable selon l'invention ;
- la figure 4 montre un schéma d'un deuxième mode de réalisation d'un absorbant optique saturable selon l'invention.

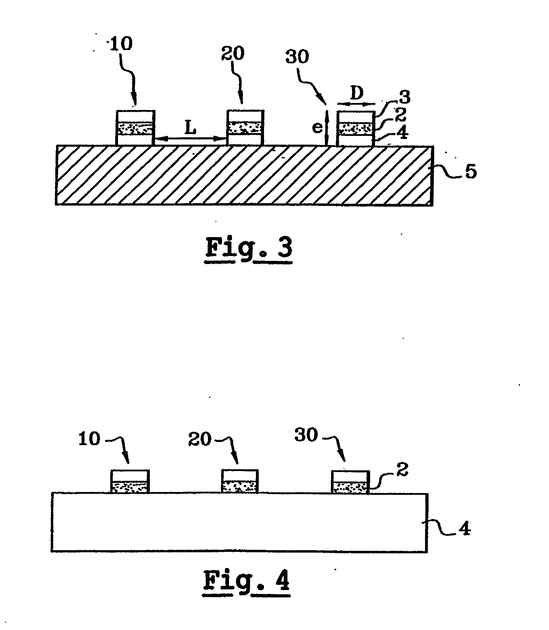

La figure 3 montre donc un schéma de la structure d'un absorbant optique saturable selon un premier mode de réalisation de l'invention.

La barrette d'absorbant optique saturable selon l'invention comprend donc une pluralité de micro-cavités, déposées sur un substrat 5 par exemple en InP, représentées à titre d'exemple au nombre de trois, respectivement 10, 20 et 30. Dans une telle configuration, les porteurs de charge ne peuvent plus diffuser et venir ainsi perturber le traitement dans une micro-cavité adjacente.

Chacune des micro-cavités 10, 20 et 30 comprend une couche d'éléments absorbants saturables 2 qui est délimitée, d'une part par un réflecteur inférieur 4 et, d'autre part, par un réflecteur supérieur 3.

La couche absorbante 2 peut être un absorbant saturable dopé, un absorbant saturable irradié et est de préférence une couche réalisée en matériau ternaire et à multi-puits quantiques. Quant aux deux réflecteurs inférieur 4 et supérieur 3, ils sont avantageusement réalisés en métal (par exemple : or ou un alliage TiAu, TiPtAu), en une multicouche de diélectriques ou en une multicouche de semi-conducteurs (miroirs de Bragg). Ainsi, un spot de lumière injecté dans une des micro-cavités de l'absorbant saturable subit plusieurs réflexions entre les deux réflecteurs avant de ressortir, permettant donc à l'onde lumineuse de traverser plusieurs fois la couche active 2.

Egalement, chacune des micro-cavités de l'absorbant optique saturable est prévue pour être associée respectivement à une et une seule des composantes spectrales focalisées sur l'absorbant saturable et qui forment le signal WDM destiné à être traité par l'absorbant saturable.

Ainsi, la structure d'absorbant optique saturable selon l'invention comprend autant de micro-cavités qu'il y a de canaux de longueur d'onde formant le signal WDM destiné à être régénéré par l'intermédiaire de la barrette d'absorbant saturable. L'éloignement spatial L entre chaque micro-cavité doit être dimensionné en fonction du multiplexeur utilisé pour former le signal WDM, soit en fonction de l'intervalle spectral entre chaque canal de longueur d'onde formant le signal multiplexé.

En effet, dans le cadre d'une application à la régénération d'un signal WDM, comme montré en référence à la figure 2, un démultiplexeur de longueurs d'onde est mis en oeuvre pour d'une part, recevoir le signal WDM et, d'autre part, pour focaliser les différentes composantes spectrales du signal WDM respectivement en différents points éloignés spatialement sur la barrette d'absorbant saturable, la distance entre les différents points de focalisation respectant l'intervalle spectral qui existe entre chaque composante spectrale dans le signal WDM.

Il est donc important d'adapter l'éloignement spatial L entre les micro-cavités au multiplexeur utilisé pour former le signal WDM de façon à être certain que toutes les composantes spectrales du signal multiplexé soient bien associées à une micro-cavité de l'absorbant saturable en vue de leur régénération.

La structure particulière de l'absorbant optique saturable selon la présente invention implique donc de disposer les micro-cavités de façon à recevoir les composantes spectrales qui leur sont respectivement associées.

De plus, chacune des micro-cavités 10, 20, 30 est dimensionnée en terme de diamètre D et d'épaisseur e, de façon à recevoir et traiter efficacement exclusivement la composante spectrale qui lui est associée.

En effet, du fait de la structure particulière en micro-cavités de l'absorbant saturable, la surface utilisable est réduite. Ainsi, à cause de la diffraction de la lumière, le cône d'acceptance de la lumière sur chacune des microcavités va s'élargir.

En effet, l'angle d'admission θ, soit la valeur maximale admissible de l'angle formé à la surface d'une micro-cavité par un faisceau incident associé à une composante spectrale du signal WDM pour que ledit faisceau soit traité de façon optimale par la couche absorbante de la micro-cavité, est inversement proportionnel au diamètre D de la micro-cavité. En jouant sur le diamètre D de la micro-cavité, on peut donc contrôler la valeur de l'angle d'admission θ, et par là même, le problème expliqué plus haut dans la description quant au recouvrement du spot à la surface de l'absorbant saturable est résolu.

En effet, le cône d'acceptance de la lumière étant alors élargi en jouant sur le diamètre D, même si l'angle d'incidence d'un faisceau lumineux correspondant à un canal de longueur d'onde donné est élevé, tant qu'il est inférieur à la valeur de l'angle d'admission θ, le traitement de l'onde dans la micro-cavité est optimal. Il n'y a alors pas de «glissement» de l'onde lors des réflexions multipes au sein de la micro-cavité.

Ainsi, le diamètre D de chacune des micro-cavités 10, 20 et 30 est adapté pour la composante spectrale qui lui est associée, de façon à accorder l'angle θ d'admission de la lumière sur la surface de la micro-cavité en question à l'angle formé par le faisceau lumineux incident correspondant à la composante spectrale focalisée associée à ladite micro-cavité.

La structure particulière en micro-cavité de l'absorbant saturable permet donc d'augmenter sensiblement la valeur maximale admissible de l'angle d'incidence formé par un faisceau lumineux correspondant à un canal WDM de longueur d'onde donné sur la surface de l'absorbant saturable.

D'autre part, l'épaisseur effective de l'ensemble de couches 2, 3 et 4 de chacune des micro-cavités 10, 20, 30 de l'absorbant optique saturable est respectivement adaptée exclusivement à la composante spectrale focalisée qui lui est associée de façon à ce que des interférences constructives se produisent entre cette composante spectrale focalisée associée et la couche d'éléments absorbants saturables 2 de chaque micro-cavité. (cette différence d'épaisseur n'a pas été représentée sur la figure). Ainsi, l'absorption de la composante spectrale focalisée associé est maximale dans la couche absorbante saturable 2 de la micro-cavité.

En effet, on a déjà vu précédemment que la condition de résonance pour une longueur d'onde donnée était intimement liée à l'épaisseur de la cavité d'absorbant saturable suivant l'expression suivante : $\lambda = n_{eff} \cdot e/K$.

Ainsi, la structure particulière en micro-cavités de l'absorbant optique saturable selon la présente invention présente en plus avantageusement une épaisseur e différente pour chaque micro-cavité adaptée précisément à la composante spectrale focalisée qui lui est associée de façon à remplir la condition de résonance.

Chaque micro-cavité est donc dimensionnée pour traiter de façon optimale exclusivement la composante spectrale focalisée qui lui est associée.

Le diamètre et l'épaisseur de chaque micro-cavité 10, 20, 30 sont donc adaptés pour d'une part, permettre un traitement optimal même pour les composantes spectrales dont l'angle d'incidence sur la micro-cavité est élevé et, d'autre part, pour que la condition de résonance soit remplie quelle que soit la longueur d'onde incidente.

La structure particulière de l'absorbant optique saturable selon l'invention présentant une pluralité de micro-cavités avec une épaisseur e variable est obtenue grâce à la mise en oeuvre, dans le cadre de la technique connue de croissance épitaxiale dite sélective nommée MOCVD (« metalorganic chemichal vapor deposition »), du procédé SAG (« selective area growth »). Ce procédé est utilisé notamment pour la fabrication de composants optoélectroniques intégrés comprenant des guides d'onde ayant des structures différentes et notamment des épaisseurs différentes.

Cependant, ce type de procédé n'a encore jamais été mis ne oeuvre dans une telle application selon la présente invention. L'application du procédé SAG à la barrette d'absorbant saturable va justement permettre d'obtenir une section à gradient d'épaisseur de l'ensemble formé par la couche absorbante saturable 2 délimitée par le réflecteur inférieur 4 et le réflecteur supérieur 3.

Pour pouvoir former une section à gradient sur le substrat de l'absorbant saturable, on réalise donc une épitaxie dite sélective. Pour cela, on dépose en une seule fois des masques diélectriques présentant une forme trapézoïdale et sur lesquels ne se déposent pas les matériaux III et V utilisés pour la croissance. Les masques sont par exemples réalisés en silice ($SIO_2$) ou encore en nitrure De silicium ($Si_3N_4$).

Il se créé une survitesse de croissance entre deux masques voisins et cette survitesse est d'autant plus grande que l'écart entre les motifs est faible. Une surépaisseur se forme donc entre les masques.

Ainsi, les masques sont placés côte à côte de telle sorte que la distance les séparant soit relativement faible à proximité d'une première zone correspondant à la section souhaitée d'épaisseur maximale, et augmente lentement lorsqu'on s'éloigne de cette première zone pour se rapprocher d'une deuxième zone correspondant à la section souhaitée amincie. Cette forme particulière trapézoïdale des masques et leur disposition permet ainsi de former des sections à gradient d'épaisseur entre les première et deuxième zones, correspondant respectivement à la section épaisse et à la section amincie de la couche que l'on a fait croître.

On obtient donc, grâce à la mise en oeuvre du procédé SAG, un contrôle de l'épaisseur épitaxie le long de la direction perpendiculaire aux bases du trapèze formé par le canal entre les deux masques.

Pour de plus amples détails concernant cette technique de croissance sélective, le lecteur pourra avantageusement se reporter à la demande de brevet FR 2 768 232 au nom d'Alcatel Alsthom recherche, notamment aux pages 7 à 9.

Les micro-cavités sont ensuite obtenues classiquement par gravure. C'est lors de cette étape que l'on peut contrôler le diamètre des micro-cavités par l'utilisation de masques adaptés.

On peut donc faire varier spatialement le long de l'axe x, l'épaisseur e de chacune des micro-cavités. Chaque micro-cavité de l'absorbant saturable est alors rendue résonante pour la longueur d'onde qui lui est associée. Selon un mode de réalisation particulier de l'invention en référence à la figure 4, l'absorbant optique saturable présente une configuration différente dans laquelle le réflecteur inférieur est intégré à la structure de micro cavité lors de la croissance des couches. Le réflecteur inférieur 4 est alors du type miroir de Bragg, par exemple épitaxié juste au dessus du substrat InP.

Une couche d'arrêt supplémentaire doit donc être prévue dans cette configuration sous la couche active absorbante 2 pour être assuré d'arrêter la gravure après la couche active 2. La couche d'arrêt est quant à elle éliminée ultérieurement. L'avantage de cette configuration par rapport à celle en référence à la figure 3 est que la chaleur s'évacue plus facilement.

L'absorbant optique comprenant une pluralité de micro-cavités selon la présente invention impose de travailler avec un peigne de longueurs d'onde fixé puisque sa structure doit préalablement être dimensionné en fonction des caractéristiques propres au signal WDM d'entrée. Cependant, ceci ne doit pas être considéré comme un inconvénient dans un environnement de télécommunication de plus en plus normalisé.

De plus, les performances des micro-cavités d'une telle barrette d'absorbant optique saturable selon l'invention sont considérablement accrues par rapport aux performances obtenues avec une barrette de l'art antérieur.

Notamment, cette augmentation des performances de la micro-cavité se fait particulièrement ressentir dans une application de l'absorbant optique saturable selon l'invention à un régénérateur optique déjà décrit en référence à la figure 2 comprenant un démultiplexeur de longueurs d'onde pour d'une part, recevoir un signal WDM composé par exemple d'au moins 25 longueurs d'onde et, d'autre part, pour focaliser les différentes composantes spectrales du signal WDM respectivement en des points séparés spatialement sur la barrette d'absorbant optique saturable et plus particulièrement en des points correspondant à l'emplacement des micro-cavités sur la barrette. Le démultiplexeur comprend de façon avantageuse un ensemble de deux lentilles B1, B3 disposées de part et d'autre d'un réseau B2.

La structure particulière de l'absorbant optique saturable selon l'invention permet alors un traitement optimal en vue de l'élimination du bruit parasite pour chaque composante spectral du signal WDM.

Bien sûr, l'utilisation des absorbants optiques saturables selon la présente invention n'est pas limitée au régénérateur optique selon l'invention, ils peuvent être utilisés dans d'autres types de dispositifs destinés à faire de la régénération de signal (par exemple, portes optiques commandées par un signal optique), ou bien encore pour réaliser des modulateurs électro-absorbants (à condition de déposer des contacts métalliques de part et d'autre de la couche active).

## Revendications

1. Absorbant optique saturable prévu pour recevoir différentes composantes spectrales focalisées, **caractérisé en ce que** la structure dudit absorbant optique saturable comprend des micro-cavités (10, 20, 30) intégrées sur un substrat (5), chacune associée respectivement à une desdites composantes spectrales, chaque micro-cavité (10, 20, 30) étant constituée d'une couche absorbante saturable (2) délimitée par un réflecteur inférieur (4) et un réflecteur supérieur (3) et étant disposée et dimensionnée de façon à recevoir exclusivement ladite composante spectrale focalisée qui lui est associée.

2. Absorbant optique saturable selon la revendication 1, **caractérisé en ce que** l'épaisseur (e) effective de chaque micro-cavité (10, 20, 30) est adaptée pour la composante spectrale qui lui est associée, de façon à ce que l'absorption de la composante spectrale focalisée associée soit maximale dans la couche absorbante saturable (2) de ladite micro-cavité.

3. Absorbant optique saturable selon la revendication 1 ou 2, **caractérisé en ce que** le diamètre (D) de chaque micro-cavité (10, 20, 30) est adapté pour la composante spectrale qui lui est associée de façon à accorder l'angle d'admission de la lumière sur la surface de ladite micro-cavité à l'angle formé sur ladite surface par le faisceau lumineux incident correspondant à la composante spectrale focalisée associée à ladite micro-cavité.

4. Absorbant optique saturable selon l'une des revendications précédentes, **caractérisé en ce que** les réflecteurs inférieur (4) et supérieur (3) sont réalisés en métal ou en une multicouche de diélectriques ou en une multicouche de semi-conducteurs.

5. Absorbant optique saturable selon l'une des revendications précédentes, **caractérisé en ce que** la couche absorbante saturable (2) comporte une couche active en matériau ternaire et à multi-puits quantiques.

6. Régénérateur optique comprenant un démultiplexeur de longueurs d'onde (B1, B2, B3) pour recevoir un signal multiplexé en longueurs d'onde et pour focaliser les différentes composantes spectrales dudit signal multiplexé en longueurs d'onde respectivement en des points séparés spatialement, ledit régénérateur optique comprenant en plus une structure d'absorbant optique saturable prévue pour recevoir lesdites différentes composantes spectrales focalisées, **caractérisé en ce que** ladite structure d'absorbant optique saturable comprend des micro-cavités (10, 20, 30) intégrées sur un substrat (5), chacune associée respectivement à une desdites composantes spectrales, chaque micro-cavité (10, 20, 30) étant constituée d'une couche absorbante saturable (2) délimitée par un réflecteur inférieur (4) et un réflecteur supérieur (3) et étant disposée et dimensionnée de façon à recevoir exclusivement ladite composante spectrale focalisée qui lui est associée.

7. Régénérateur optique selon la revendication 6, **caractérisé en ce que** le démultiplexeur comprend un ensemble de deux lentilles (B1, B3) disposées de part et d'autre d'un réseau (B2).

**Fig. 1** (ART ANTERIEUR)

**Fig. 2** (ART ANTERIEUR)

**Fig. 3**

**Fig. 4**

Office européen
des brevets

**RAPPORT DE RECHERCHE EUROPEENNE**

Numéro de la demande

EP 02 29 1885

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A,D | FR 2 784 202 A (CIT ALCATEL) 7 avril 2000 (2000-04-07) * le document en entier * | 1-7 | G02F1/35 G02B6/12 G02F1/017 |
| A | EP 0 994 584 A (CIT ALCATEL) 19 avril 2000 (2000-04-19) * colonne 2, ligne 42 - colonne 3, ligne 26 * * colonne 3, ligne 44 - colonne 5, ligne 23; figure 1 * | 1,6 | |
| A | GB 2 224 612 A (STC PLC) 9 mai 1990 (1990-05-09) * page 4, alinéa 6 - page 5, alinéa 1; figures 2,5 * | 1,6 | |
| A | PATENT ABSTRACTS OF JAPAN vol. 014, no. 230 (P-1048), 16 mai 1990 (1990-05-16) & JP 02 056508 A (CANON INC), 26 février 1990 (1990-02-26) * abrégé * | 1,6 | |
| A | US 4 773 063 A (HUNSPERGER ROBERT G ET AL) 20 septembre 1988 (1988-09-20) * colonne 8, ligne 56 - colonne 10, ligne 24; figure 2 * | 1,6 | |

**DOMAINES TECHNIQUES RECHERCHES (Int.Cl.7)**

G02F
G02B
H04B
H04J

Le présent rapport a été établi pour toutes les revendications

| Lieu de la recherche | Date d'achèvement de la recherche | Examinateur |
|---|---|---|
| BERLIN | 18 décembre 2002 | Manntz, W |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

# EP 1 291 707 A1

**ANNEXE AU RAPPORT DE RECHERCHE EUROPEENNE
RELATIF A LA DEMANDE DE BREVET EUROPEEN NO.**

EP 02 29 1885

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-12-2002

| Document brevet cité au rapport de recherche | | Date de publication | Membre(s) de la famille de brevet(s) | | Date de publication |
|---|---|---|---|---|---|
| FR 2784202 | A | 07-04-2000 | FR | 2784202 A1 | 07-04-2000 |
| | | | AU | 5267599 A | 06-04-2000 |
| | | | CN | 1261746 A | 02-08-2000 |
| | | | EP | 0992842 A1 | 12-04-2000 |
| | | | JP | 2000111965 A | 21-04-2000 |
| EP 0994584 | A | 19-04-2000 | FR | 2784826 A1 | 21-04-2000 |
| | | | EP | 0994584 A1 | 19-04-2000 |
| | | | JP | 2000278220 A | 06-10-2000 |
| GB 2224612 | A | 09-05-1990 | AUCUN | | |
| JP 02056508 | A | 26-02-1990 | AUCUN | | |
| US 4773063 | A | 20-09-1988 | JP | 61121007 A | 09-06-1986 |

Pour tout renseignement concernant cette annexe : voir Journal Officiel de l'Office européen des brevets, No.12/82

EPO FORM P0460